# FASCICULE DE BREVET EUROPEEN

(11) **EP 3 501 958 B1**
(45) Date de publication et mention de la délivrance du brevet: **05.07.2023**
(21) Numéro de dépôt: 18214357.8
(22) Date de dépôt: 20.12.2018
(51) Int. Cl.: B62K 21/02, B62K 19/16, B62K 19/30, B62K 25/02, F16F 7/104

(54) **ÉLÉMENT DE STRUCTURE D'UN CYCLE MUNI D'UN DISPOSITIF D'AMORTISSEMENT DES VIBRATIONS ET PROCÉDÉ DE RÉALISATION D'UN TEL ÉLÉMENT**
STRUKTURELEMENT EINES FAHRRADS, DAS MIT EINER SCHWINGUNGSDÄMPFUNGSVORRICHTUNG AUSGESTATTET IST, UND HERSTELLUNGSVERFAHREN EINES SOLCHEN ELEMENTS
STRUCTURAL ELEMENT OF A CYCLE PROVIDED WITH A DEVICE FOR DAMPING VIBRATIONS AND METHOD FOR MANUFACTURING SUCH AN ELEMENT

(30) Priorité: 20.12.2017 FR 1771397
(43) Date de publication de la demande: 26.06.2019
(73) Titulaire: CARDINAL CYCLING GROUP, Little Rock, AR 72212 (US)
(72) Inventeur: DE LA CORTE, Tony, 38140 La murette (FR)
(74) Mandataire: Alatis

(56) Documents cités:
- EP-A1- 1 767 447
- EP-A2- 2 353 984
- WO-A1-2017/209606
- CN-Y- 201 026 979
- DE-B- 1 090 127
- DE-C- 458 721
- FR-A- 412 006
- FR-A1- 2 328 606
- FR-A1- 2 923 449
- FR-A1- 3 052 433
- US-A- 5 193 832
- US-A1- 2013 264 794
- US-B1- 6 352 276

## Description

L'invention concerne un élément de structure de cycle équipé d'un dispositif d'amortissement des vibrations, par exemple, d'un batteur dynamique, éventuellement amovible. Elle concerne également un cycle, autrement dit un vélo, bicyclette, tricycle ou monocycle, réalisé avec de tels éléments de structure et un procédé d'intégration du dispositif d'amortissement des vibrations dans ledit élément de structure.

Plus particulièrement, l'invention s'intéresse à un perfectionnement d'un élément de structure tel qu'une fourche ou un cadre de bicyclette permettant l'intégration d'au moins un dispositif d'amortissement, comme par exemple un batteur dynamique, éventuellement amovible et interchangeable.

### ÉTAT DE LA TECHNIQUE ANTÉRIEURE

Les roues de cycles ou de vélos sont soumises à des vibrations qui trouvent leur origine dans l'état de surface plus ou moins irrégulier de la route ou de la piste. Outre le fait que ces vibrations génèrent des micro-traumatismes articulaires, elles dégradent aussi la tenue de route du cycle, compromettent la maîtrise et le contrôle de la trajectoire et nuisent, par conséquent, au confort, à la sécurité et à la performance du cycliste. En outre, ces vibrations peuvent détériorer ou accélérer l'usure de certaines pièces constitutives du cycle.

En présence de telles vibrations qui se situent généralement dans une plage de fréquences de 20 à 50 Hz, il se produit un effet d'amplification vibratoire lié à des phénomènes de résonance. Cet effet a tendance à se propager, via la fourche, dans toute la structure du cycle, de la potence au guidon, au cintre et jusqu'à la selle.

Les roues qui sont directement au contact du revêtement de la chaussée, ainsi que les pneus dont elles sont équipées, pourraient être optimisés en priorité pour limiter la transmission des vibrations au cadre du cycle. Toutefois, les fabricants de cadres de cycles ne maîtrisant pas le choix des roues ni celui des pneus par l'utilisateur se sont donc orientés vers une conception de bicyclettes et, notamment, de cadres permettant de pondérer au mieux leur comportement vibratoire.

C'est ainsi que la structure des cycles a été pourvue de systèmes d'amortissement divers et en particulier de « batteurs dynamiques » qui sont des dispositifs du type « masse-ressort », destinés à vibrer en filtrant les pics de vibrations néfastes au comportement mécanique et au rendement cinématique du cycle.

En particulier, en traitant les vibrations au niveau de la fourche du cycle, c'est à dire au plus près de la roue et donc de la surface de roulement, il est possible d'atténuer notablement ces phénomènes vibratoires et d'éviter leur propagation aux autres parties du cycle et au cycliste.

Dans ce contexte, le FR 2 923 449 divulgue un dispositif de filtration et d'absorption de l'énergie vibratoire ou batteur, comprenant au moins une lame dont une première extrémité est libre et porte éventuellement une masselotte et la seconde extrémité est fixée à un élément constitutif du vélo, par exemple, à l'intérieur d'au moins l'un des bras de la fourche et, de préférence, au niveau de sa zone de liaison avec la roue.

Cette lame est réalisée dans un premier matériau sensiblement rigide et est accolée à au moins une bande réalisée dans un deuxième matériau sensiblement élastique. Les vibrations auxquelles est soumise la roue sont transmises à la lame, via la zone de liaison avec la fourche, sous forme d'oscillations.

Par suite, la bande en contact avec la lame se trouve soumise à des efforts tangentiels issus des oscillations de la lame qui entraînent une déformation par cisaillement et donc une dissipation de l'énergie vibratoire.

Parallèlement, on a cherché à réduire le poids des constituants du vélo sans toutefois diminuer leur résistance mécanique, en utilisant des matériaux composites qui sont plus légers que les alliages métalliques traditionnels. C'est le cas, notamment, pour la fourche de bicyclette dont les deux bras sont constitués de fourreaux symétriques à la base desquels sont prévues des pattes de liaison avec l'axe de la roue avant.

De telles fourches en matériau composite ont été réalisées par moulage, comme décrit, notamment, dans les brevets FR 2 684 062 et EP 1 015 301. Le moulage est effectué sur une préforme comportant une empreinte de fourche avec un matériau composite comprenant généralement des couches de fibres de carbone et de résine. Après extraction du moule, les extrémités des fourreaux, au moins partiellement creuses, sont tronçonnées pour y introduire des inserts formant les pattes de liaison avec la roue qui sont ensuite solidarisées aux fourreaux par collage.

Il est connu, par ailleurs, d'intégrer un dispositif d'amortissement ou de filtration des vibrations dans une fourche en matériau composite. Dans un tel mode de réalisation, au moins l'un des deux bras de la fourche renferme un batteur comprenant une lame flexible portant à son extrémité libre une masselotte et fixée par collage de son autre extrémité sur la paroi intérieure du fourreau.

Certaines fourches intègrent des systèmes d'amortissement plus classiques comme dans le WO 2017/209606 qui décrit une fourche avant pour cyclomoteur. Cette fourche comprend un fourreau dans lequel se trouvent, une cavité centrale recevant un système d'amortissement et une cavité supérieure délimitée par une cloison intérieure transversale. Mais aucune de ces cavités n'est configurée pour former un boîtier permettant d'accéder depuis l'extérieur au système d'amortissement.

Le US 5193832 décrit une fourche analogue dans laquelle le fourreau contient un manchon central recevant le système d'amortissement. Le FR3052433A1 et le FR412006 décrivent d'autres éléments de structure de cycles. Par ailleurs, le FR 2 328 606A1 et le DE 458721C décrivent des éléments de structure de cycles comprenant au moins un fourreau tubulaire pourvu d'une paroi extérieure délimitant, avec une cloison intérieure s'étendant de façon sensiblement longitudinale, au moins deux cavité internes dont l'une forme un boîtier pour un système d'amortissement. Le DE 1090127B décrit, quant à lui, un élément de structure selon le préambule de la revendication 1.

Cependant, les solutions d'intégration connues ne sont pas satisfaisantes car elles ne permettent pas, d'une part, d'intégrer un dispositif d'amortissement volumineux dans l'espace creux d'une fourche classique sans nuire à sa résistance mécanique et, d'autre part, de remplacer le dispositif d'amortissement en présence, par exemple, d'un batteur déficient ou défectueux, sans qu'il soit nécessaire de changer intégralement la fourche ce qui est économiquement pénalisant

### EXPOSÉ DE L'INVENTION

La présente invention a pour but de résoudre les problèmes techniques posés par l'art antérieur en modifiant un élément de structure de cycle ou de vélo pour y intégrer un système d'amortissement des vibrations sans compromettre, ni la résistance mécanique de la structure, ni l'efficacité de la filtration et de l'absorption des vibrations.

Un autre but de l'invention est de proposer un élément de structure de cycle ou de vélo permettant de monter un système d'amortissement des vibrations de façon amovible et en particulier un batteur dynamique amovible.

Un autre but de l'invention est de proposer un procédé permettant de réaliser une intégration optimale, dans toute partie de la structure du cycle, d'un batteur amovible en autorisant son remplacement en cas d'usure ou de défaut de fonctionnement et sans induire de dégradation des capacités fonctionnelles de la structure du cycle.

Le premier but est atteint selon l'invention au moyen d'un élément de structure d'un cycle selon la revendication 1.

De préférence, la cloison intérieure présente, en dessous de sa jonction avec la paroi extérieure, une portion inclinée vers le bas en direction de la paroi extérieure.

Selon une première variante avantageuse, les cavités internes sont délimitées chacune entre ladite cloison intérieure et, respectivement, la paroi extérieure avant et la paroi extérieure arrière.

Dans ce cas, la cavité interne formant boîtier est, de préférence, située entre la cloison intérieure et la paroi extérieure arrière.

Selon une seconde variante avantageuse, les cavités internes sont délimitées chacune entre ladite cloison intérieure et, respectivement, la paroi extérieure droite et la paroi extérieure gauche.

Selon encore une caractéristique avantageuse, la cloison intérieure participe à la résistance mécanique du fourreau en coopération avec la paroi extérieure située du côté opposé à la cavité.

Selon une autre caractéristique avantageuse, ledit système d'amortissement est un batteur dynamique fixé de manière amovible dans l'une desdites cavités internes.

Selon une première variante de réalisation du système d'amortissement, le batteur comprend une lame flexible dont une extrémité est fixe et l'autre extrémité est libre et porte une masselotte.

De préférence, la masselotte est pourvue d'un garnissage élastomère.

Selon une autre caractéristique avantageuse, le fourreau tubulaire est obturé par un insert sur lequel est fixé le système d'amortissement.

Ce système d'amortissement est fixé sur l'insert, par exemple, au moyen de vis.

Selon un mode de réalisation préférentiel, l'élément de structure de l'invention est réalisé en un matériau composite comprenant des fibres de carbone noyées dans une résine.

Selon encore une autre caractéristique avantageuse, le système d'amortissement s'étend dans la cavité interne de façon sensiblement parallèle à l'axe du fourreau.

Un autre objet de l'invention est une fourche de bicyclette comprenant deux fourreaux formant bras dont l'un au moins est constitué d'un élément de structure tel que défini ci-dessus.

Selon une première variante de cette fourche, un seul de ses deux bras reçoit un système d'amortissement, par exemple sous forme d'un batteur dynamique dans la cavité interne et en ce que ce batteur dynamique comporte une masse supérieure à 100g.

Selon une autre variante de cette fourche, ses deux bras reçoivent chacun un système d'amortissement dynamique dans la cavité et en ce que chaque système d'amortissement comporte une masse inférieure à 100g.

Encore un autre objet de l'invention est une bicyclette comprenant, notamment, une fourche telle que définie ci-dessus et une roue avant équipée soit d'un système de freinage à disque, soit d'un système de freinage à patins.

Un dernier objet de l'invention est un procédé de réalisation d'un élément de structure selon la revendication 17.

Selon une caractéristique avantageuse du procédé, on place un système d'amortissement dynamique tel qu'un batteur dans la cavité interne ouverte, on fixe le batteur par vissage sur l'insert puis on assemble de manière amovible un capot rapporté pour fermer la cavité.

Grâce au perfectionnement de l'invention, le système de filtration, tel qu'un batteur dynamique filtrant les vibrations, peut être aisément remplacé en cas de défaut ou d'usure et/ou être échangé avec un autre batteur pour optimiser les capacités de filtration des vibrations et les adapter à l'état de la route et aux conditions de déplacement et de pédalage (vitesse, confort, performances, ...).

Le caractère accessible et interchangeable du système de filtration à batteur dynamique, permet de sélectionner, en particulier, une longueur de lame, la raideur de cette lame et une masse adaptée.

Le batteur dynamique pourrait également être réalisé par l'association d'un ressort et d'une masselotte sans sortir du cadre de l'invention.

En outre, l'élément de structure à batteur interchangeable de l'invention est réalisé, selon l'invention, par moulage d'un matériau composite et peut ainsi prendre un profil spécifique lui permettant d'être intégré dans toute partie de la bicyclette.

En particulier, le procédé de l'invention peut donner la forme et les dimensions propres à un élément de structure déterminé et qui nécessitent des fonctions spécifiques, tel que la fourche, le cadre, ou bien la tige de selle, ..., tout en le dotant d'une cavité interne dans laquelle sera éventuellement monté un batteur interchangeable.

Ainsi, grâce à ces caractéristiques, il est possible, notamment, de réaliser une fourche filtrante asymétrique en matériau composite dont le profil est adapté à un montage sur une roue équipée d'un frein à disque et dont les propriétés mécaniques sont conservées.

### BRÈVE DESCRIPTION DES FIGURES

D'autres caractéristiques et avantages de l'invention ressortiront à la lecture de la description qui va suivre, en référence aux figures annexées et détaillées ci-après.
La figure 1 représente une vue partielle de profil d'une bicyclette équipée d'un mode de réalisation d'une fourche selon l'invention.
La figure 2 représente une vue en perspective d'un mode de réalisation d'un batteur dynamique utilisé dans le cadre de l'invention.
Les figures 3A et 3B sont des vues, respectivement, en perspective éclatée et de l'arrière d'un mode de réalisation d'une fourche avec batteur amovible selon l'invention.
Les figures 4A, 4B et 4C représentent des vues partielles en coupe verticale selon le plan médian III-III de l'un des bras de la fourche de la figure 3B, dans différentes positions du batteur.
La figure 5 représente une vue en coupe transversale selon le plan IV-IV de l'un des bras de la fourche tel que représenté partiellement sur la figure 4B.
Pour plus de clarté, les éléments identiques ou similaires sont repérés par des signes de référence identiques sur l'ensemble des figures.

### DESCRIPTION DÉTAILLÉE DE MODES DE REALISATION

Naturellement, les modes de réalisation illustrés par les figures présentées ci-dessus et décrits ci-après ne sont donnés qu'à titre d'exemples non limitatif. Il est explicitement prévu que l'on puisse combiner entre eux ces différents modes pour en proposer d'autres.

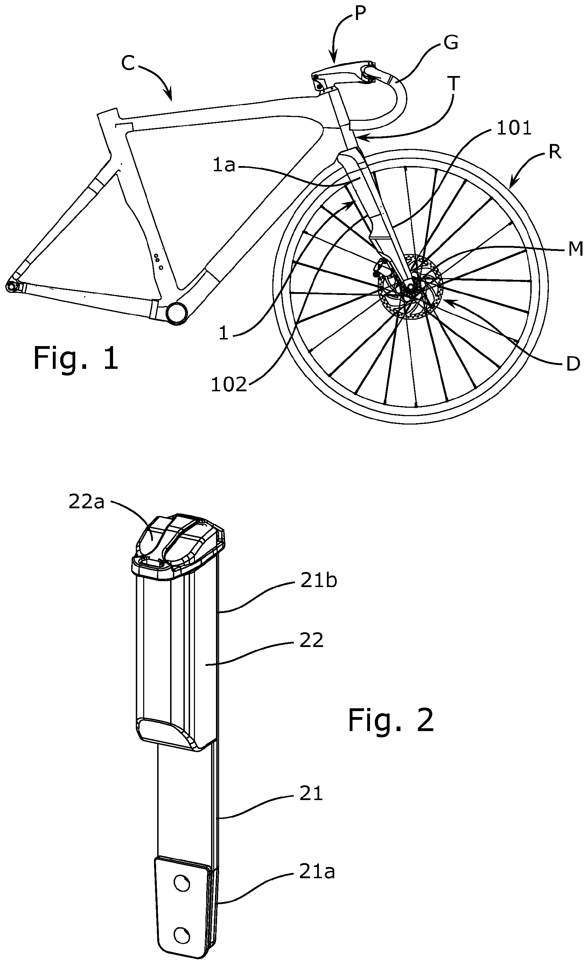

La figure 1 représente une structure partielle de bicyclette (sans roue arrière) avec un cadre monobloc C raccordé à une fourche 1 assurant la liaison entre la roue avant R et une potence P de support d'un guidon G.

La fourche 1 comprend deux bras 1a, 1b sensiblement verticaux qui encadrent la roue R et dont les extrémités inférieures sont raccordées à l'axe et au moyeu M de la roue R qui est équipé ici d'un frein à disque D (représenté ici derrière la roue). Le disque D est décalé parallèlement au plan de la roue R.

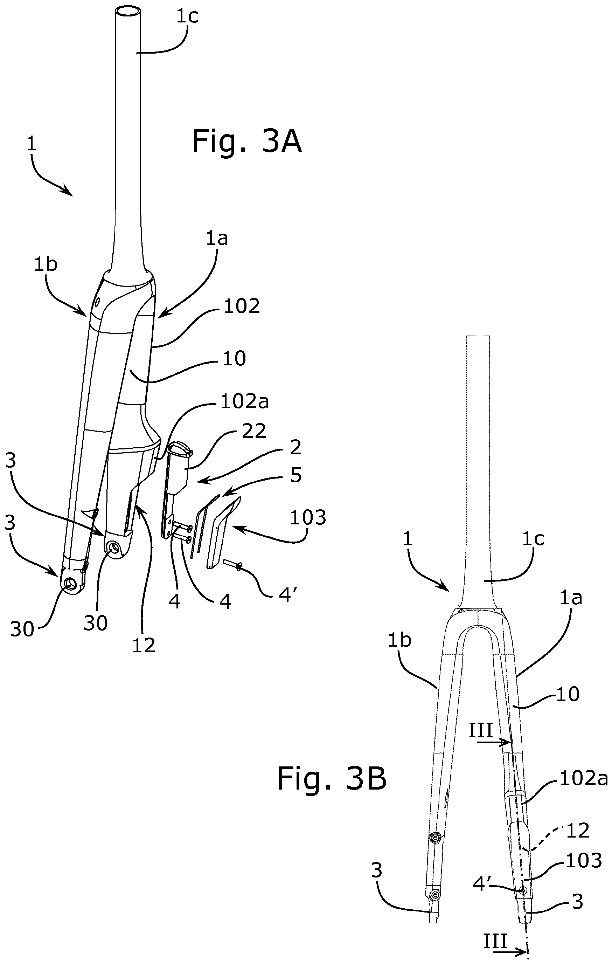

La fourche 1 est pourvue d'un batteur dynamique 2 qui est visible ici de profil et qui est fixé sur la partie basse d'au moins l'un des deux bras de la fourche, et ici le bras 1a. Ce batteur dynamique est de type « masse-ressort » et dans la réalisation illustrée le ressort est une lame à effet ressort. Dans le cas particulier du vélo équipé d'un frein à disque sur la roue avant, le batteur 2 est positionné à l'intérieur de la branche de la fourche 1a, du côté de la fourche où n'est pas monté le disque de frein D. Ce batteur qui est connu en lui-même est décrit en détail par la suite en référence, notamment, aux figures 2 et 3A.

En effet, afin de dissiper les pics de vibrations néfastes au comportement mécanique et au rendement cinématique du cycle, il est connu d'équiper certains éléments de la structure de la bicyclette de dispositifs, dénommés batteurs dynamiques, destinés à vibrer pour absorber les vibrations et stopper leur propagation. Le choix de la raideur du ressort ou de la lame-ressort ainsi que le poids de la masselotte permet de façon connue de régler le batteur sur la fréquence à amortir.

En particulier, en traitant les vibrations au niveau de la fourche, c'est à dire au plus près de la roue et donc de la surface de roulement, il est possible d'atténuer notablement ces phénomènes vibratoires.

Toutefois, il est possible d'améliorer encore le traitement des vibrations en équipant la bicyclette par des batteurs dynamiques intégrés à d'autres éléments de structure tels que le cadre C, la tige de selle, la potence P, le guidon G, et utilisés seuls ou en association entre eux ou en association avec le batteur dynamique monté dans la fourche 1.

Comme illustré par la figure 2, le batteur utilisé dans l'invention comprend une lame flexible 21, par exemple métallique (par exemple, en acier inox, titane, ...). Cette lame flexible 21 est de préférence constituée de plusieurs couches et, par exemple, d'une couche d'élastomère intercalée entre deux couches métalliques pour permettre l'amortissement des vibrations par dissipation d'énergie lors du cisaillement créé à l'intérieur de la couche élastomère. Ainsi, le batteur utilisé est alors du type Masse-Ressort-Amortisseur.

L'extrémité de cette lame 21 et, de préférence, l'extrémité inférieure 21a est fixée sur un élément de structure du cycle comme par exemple la fourche 1. L'autre extrémité (supérieure) 21b de la lame 21 est libre et porte une masselotte 22 (par exemple, en alliage métallique à base de laiton), qui est garnie ici d'une coiffe 22a en matériau élastomère.

La figure 3 représente un élément de structure constitué ici d'une fourche 1 comprenant deux bras 1a, 1b constitués chacun d'un fourreau tubulaire 10. Les deux fourreaux 10 se rejoignent en partie haute pour former un tube unique 1c qui forme un support au tube de direction T du cadre ainsi qu'à la potence P qui relie la fourche au guidon G. Le fourreau tubulaire 10 ou tube creux peut présenter des sections transversales de formes variées, de type ovale, circulaire ou même polygonale. Il est de forme longiligne et de sections évolutives et/ou constantes sur sa longueur.

Dans un objectif d'allègement de la structure du cycle, la paroi extérieure du fourreau 10 est réalisée par moulage d'une matière composite rigide appropriée (fibres de carbone et/ou de verre et résine) obtenue par un procédé connu ou par le procédé particulier de l'invention décrit en détails plus loin. On ne sortira cependant pas du cadre de l'invention si le fourreau est réalisé dans un autre matériau tel que de l'aluminium ou de l'acier.

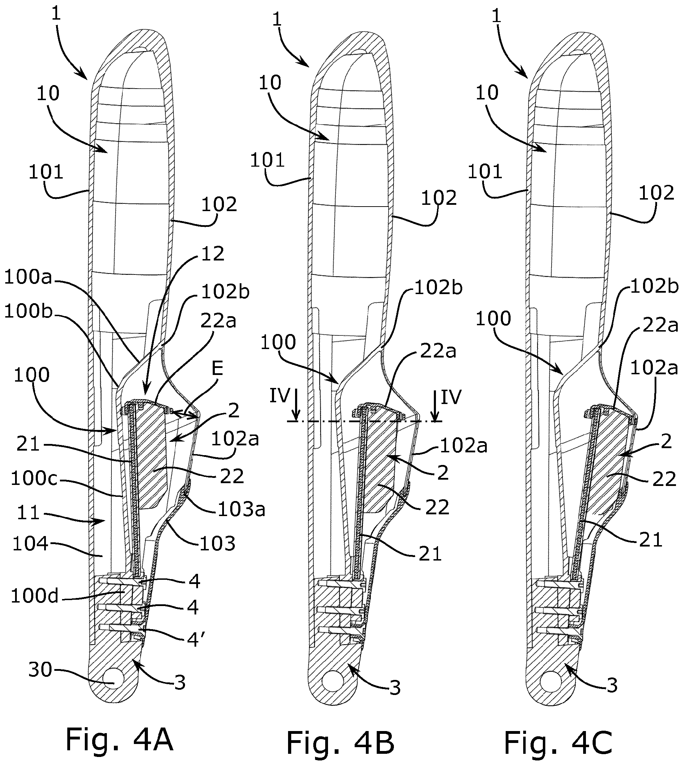

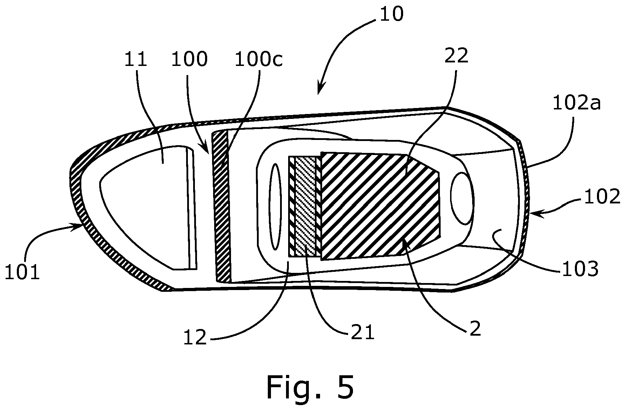

Selon l'invention et comme illustré par les figures 4A, 4B, 4C et 5 représentant des coupes longitudinales et transversale du bras 1a de la fourche 1, le fourreau 10 comporte une cloison intérieure 100 délimitant avec la paroi extérieure du fourreau 101,102 au moins deux cavités internes.

Une première cavité 12 est située du côté arrière et est délimitée entre la cloison intérieure 100 et une portion de la paroi extérieure 102 tournée vers l'arrière de la bicyclette. Une seconde cavité interne 11 est située du côté avant de la fourche 1 et est délimitée entre la paroi intérieure 100 et la paroi extérieure 101 tournée vers l'avant de la bicyclette (après montage de la fourche 1).

La paroi 102 est dénommée par la suite paroi extérieure arrière car tournée vers l'arrière du cycle, par opposition à la paroi extérieure avant 101 qui est tournée vers l'avant (voir figures 3A et 4A).

La cloison intérieure 100 est réalisée de préférence avec un matériau de la même famille que la paroi extérieure 101, 102. Par exemple, dans le cas où la paroi extérieure est en matériau composite, la cloison intérieure sera également en matériau composite. On ne sortira pas du cadre de l'invention si la cloison intérieure 100 est positionnée de telle façon à l'intérieur du fourreau que les deux cavités internes 11, 12 soient situées l'une vers la droite et l'autre vers la gauche de la fourche 1.

La cavité interne 11 délimitée par la paroi extérieure avant 101 et par la cloison intérieure 100 est vide et présente des surfaces continues et régulières participant à la résistance mécanique du fourreau 10 et donc de la fourche 1. Cette cavité interne 11 se prolonge jusqu'en haut du fourreau et même jusque dans le tube supérieur 1c de la fourche. La résistance mécanique de la fourche 1 est réglée par le choix des matériaux des parois des cavités 11 et 12, par l'épaisseur de ces parois et par l'orientation des fibres. En particulier les épaisseurs de la paroi 101 et de la cloison intérieure 100 limitant la cavité vide 11 sont sensiblement similaires et supérieures à l'épaisseur de la paroi extérieure 102 limitant la cavité 12 recevant le dispositif d'amortissement.

Le cas échéant, la cavité interne 11 pourra être remplie d'un matériau léger (du type mousse polyuréthane, matériau alvéolaire, polystyrène expansé, ...) et être divisée en cellules ou associée à d'autres cavité internes ou sous-cavités, séparées par des cloisons ayant diverses orientations (transversales, verticales, inclinées, ...).

Par ailleurs, la cavité 12 délimitée par la paroi extérieure 102 et par la cloison intérieure 100 forme un boîtier destiné à recevoir le batteur dynamique 2. Ce batteur dynamique 2 est fixé, de préférence, de manière amovible et interchangeable dans la cavité 12. Aussi, le fourreau 10 ou la fourche 1 selon l'invention présente une excroissance formant un bossage sur l'une de ses faces. Ce bossage est situé dans la zone du fourreau comportant les deux cavités internes 11, 12, comme illustré sur la figure 5.

Toutefois, l'invention n'est pas limitée à la présence du système d'amortissement 2 dans la cavité 12 située à l'arrière de la fourche 1. En effet, il est possible, dans le cadre de l'invention de disposer le système d'amortissement 2 dans une cavité interne ménagée à tout emplacement du fourreau, en particulier, dans la cavité 11 située à l'avant ou dans une autre cavité située du côté gauche ou du côté droit de la fourche 1.

De préférence et comme illustré sur les figures, la cloison intérieure 100 ne s'étend pas ici sur toute la hauteur du fourreau 10 ou sur toute la hauteur du bras de la fourche 1 mais s'étend localement sur une partie seulement de leur hauteur. La cloison intérieure s'étend sensiblement dans le sens longitudinal du fourreau 10 ou du bras de la fourche 1. Elle est reliée par son extrémité supérieure à la paroi extérieure arrière 102, s'en écarte en se rapprochant de l'autre paroi extérieure 101 puis revient vers cette même paroi extérieure 102 à laquelle elle est à nouveau reliée par son extrémité inférieure de façon à ne pas entraver la cavité interne 11. Dans le plan de coupe de la figure 5, la cavité interne 11 a une section inférieure à celle de la cavité interne 12.

Du fait de la présence de la cavité interne 12, la cloison intérieure 100 a pour fonction d'assurer, au moins partiellement, la résistance mécanique du fourreau en coopération avec la portion de paroi extérieure 101 située du côté opposé à la cavité 12, c'est-à-dire celle qui délimite la cavité 11 en étant tournée vers l'avant de la bicyclette après assemblage de la fourche 1 sur la roue R. A cet effet, la cloison interne 100 forme un prolongement intérieur de la paroi extérieure arrière 102.

La paroi extérieure arrière 102 présente une ouverture communiquant avec la cavité interne 12 qui est fermée par un capot ou une trappe 103. La trappe 103 porte des organes de fixation amovible (par exemple, de vissage ou d'encliquetage) coopérant avec des organes complémentaires ménagés sur la paroi extérieure 102 autour de la cavité 12. Le capot 103 est muni éventuellement d'un joint d'étanchéité 5 (figure 3). Ce capot 103 est réalisé dans un matériau plastique, ou métallique ou composite et, le cas échéant, avec une matière plastique transparente permettant de visualiser le batteur 2.

Selon une variante non représentée, le capot 103 est rendu solidaire de la paroi extérieure 102, en étant soit collé, de façon définitive (variante non revendiquée) ou de façon amovible, au moyen d'un adhésif thermo-fusible par exemple, soit relié de façon mobile au moyen de charnières fixées sur le bord de la cavité 12.

Dans le mode de réalisation illustré par les figures 3 et 4A, le capot 103 est positionné dans la partie inférieure 102a de la paroi extérieure 102, dans la zone de la cavité 12, et est fixé dans sa partie inférieure au moyen d'une vis 4' engagée dans un orifice taraudé de l'insert 3. Dans un autre mode de réalisation non représenté, le capot pourrait également être positionné plus haut sur la fourche 1, toujours dans la zone de la cavité 12.

Le bord supérieur du capot 103 présente une rainure 103a dans laquelle est inséré et calé le rebord inférieur de la paroi extérieure 102 en position de fermeture de la cavité 12.

Dans un autre mode de réalisation non représenté, le capot pourrait également être positionné plus haut sur la fourche 1, toujours dans la zone de la cavité 12.

Selon une variante non représentée, le logement du batteur est constitué d'un boîtier indépendant et amovible qui est rapporté et fixé dans une cavité interne réalisé au préalable dans le fourreau.

Le fourreau tubulaire 10 est creux et est obturé en partie basse par un insert 3, de préférence métallique (aluminium, ...) ou en matériau composite qui reprend les efforts transmis par la roue. Cet insert 3, est pourvu d'un orifice 30 destiné à recevoir l'axe de la roue avant R et sur cet insert 3 est fixée l'extrémité inférieure 21a du batteur 2, c'est-à-dire l'extrémité inférieure de la lame ressort 21. La fixation du batteur 2 est assurée ici au moyen de deux vis 4 montées dans des alésages taraudés de l'insert 3 ménagés au-dessus de celui de la vis 4' de fixation du capot 103.

Comme illustré, notamment, par les figures 4A à 4C, l'épaisseur de la paroi extérieure 101, 102 délimitant le fourreau 10 est variable sur la hauteur de la fourche 1 et est globalement comprise entre 0.5mm et 3mm.

La paroi extérieure avant 101 s'étend de façon sensiblement continue du haut vers le bas tandis que la paroi extérieure arrière 102 présente une zone d'inflexion 102b à la liaison avec la cloison interne 100. Cette zone d'inflexion se prolonge par une excroissance 102a délimitant une zone élargie en partie haute de la cavité 12 de façon à ménager un espace suffisant pour l'introduction et le débattement ultérieur du batteur 2, comme décrit par la suite en référence aux figures 4A à 4C. Ainsi la cavité 12 présente un volume supérieur au volume de la cavité 11, ce volume étant considéré sur la distance en hauteur occupée par le batteur.

La cloison interne 100, quant à elle, a une épaisseur sensiblement uniforme d'environ 1 mm et présente, en dessous de sa jonction avec la paroi extérieure arrière 102, une portion inclinée 100a vers l'avant et vers le bas en direction de la paroi extérieure avant 101. L'inclinaison de la portion 100a est d'environ 35° à 45° par rapport à l'axe vertical du fourreau 10. La portion inclinée 100a délimite, en partie haute de la cavité 12, une zone élargie, complémentaire et symétrique de celle délimitée par l'excroissance 102a de la paroi extérieure arrière 102.

La zone inclinée 100a se prolonge, en se rapprochant de la paroi extérieure avant 101, par un rétreint coudé 100b qui est situé à une distance d'au moins 8mm de la paroi extérieure avant 101, pour assurer la résistance de la fourche aux efforts de flexion en particulier. Du fait de la présence de ce rétreint coudé 100b, la cavité 11 ne recevant pas le batteur est étroite et, en particulier, plus étroite dans cette section que la cavité 12 recevant le batteur 2, comme illustré par les figures 4A à 4C.

En dessous du rétreint coudé 100b, la cloison interne 100 présente une portion 100c légèrement inclinée qui s'écarte, vers l'arrière et vers le bas en direction de la paroi extérieure arrière 102, d'un angle d'environ 5° par rapport à l'axe vertical du fourreau 10 et délimite, avec la paroi extérieure avant 101, un conduit évasé 104 en partie basse du bras de la fourche 1.

Avec la configuration décrite ci-dessus et telle qu'elle est représentée en coupe, notamment, sur la figure 4A, les portions 100a, 100b et 100c de la cloison interne 100 assurent un arc-boutement intérieur participant à la rigidité et à la résistance mécanique du fourreau 10. Cet arc-boutement est nécessaire pour compenser l'affaiblissement de la paroi extérieure arrière 102 qui est amincie au-dessus de la cavité 12 et interrompue en partie basse par son ouverture débouchante.

Afin de renforcer encore la rigidité du fourreau 10, le bord inférieur 100d de la cloison intérieure 100 est ici emprisonné et vissé entre l'extrémité inférieure du batteur 2 et l'insert 3, comme illustré en coupe par la figure 4A.

A l'extrémité inférieure du fourreau 10, les deux cavités internes 11, 12 débouchent à l'extérieur au même niveau, avant le montage de l'insert 3.

Les vibrations issues de la roue R sont transmises, via l'insert 3, au batteur 2 qui se met à osciller et permet ainsi de diminuer l'amplitude des pics de vibrations. Les oscillations du batteur 2 se traduisent par des flexions de la lame 21 et des débattements rapides de son extrémité supérieure portant la masselotte 22 dans la cavité 12 entre deux positions extrêmes de butée représentées, respectivement, par les figures 4A et 4C. La position extrême avant du batteur 2 (figure 4A) correspond à un contact avec la cloison interne 100 au niveau de sa portion biseautée 100c tandis que la position extrême arrière du batteur 2 (figure 4C) correspond à un contact avec la paroi extérieure arrière 102 au niveau de son excroissance 102a.

Dans la plage de vibrations généralement rencontrées, l'amplitude d'oscillation du batteur 2 est comprise entre 4° et 5° et permet d'atténuer les fréquences comprises entre 30 et 36 Hz, de préférence 33Hz.

Le niveau d'atténuation du pic de fréquence ou d'amortissement des vibrations par le batteur 2 est compris entre 20 et 30 %.

Lorsque la roue avant du vélo est équipée d'un frein à disque, le bras de la fourche situé du côté du disque a alors un profil plus étroit qui n'est pas compatible avec l'intégration d'un batteur. Dans ces conditions, le batteur ne peut être monté que sur l'autre bras et doit assurer à lui-seul les fonctions et la capacité de filtration des vibrations de deux batteurs classiques.

Or, cet objectif impose d'augmenter de façon notable les dimensions du dispositif d'amortissement ce qui pose à la fois des problèmes d'encombrement, de fixation à l'intérieur du bras et, in fine, de résistance mécanique de la fourche.

Dans ce cas, le dispositif d'amortissement est configuré et dimensionné de façon à posséder, à lui seul, une capacité de filtration suffisante pour traiter les vibrations transmises aux deux bras et, en particulier, il est alors nécessaire d'augmenter sensiblement la masse du batteur. De bons résultats d'amortissement ont été obtenus avec une masse du batteur supérieure à 100g, par exemple, comprise entre 120g et 180g et de préférence entre 155 et 165g, réalisé par une masselotte métallique d'une largeur comprise entre 15 et 20mm.

Du fait de ces dimensions importantes, la paroi extérieure 102 du fourreau présente une forte excroissance 102a formant un bossage qui s'étend sur toute la longueur de la cavité 12 recevant le batteur. Cette excroissance 102a s'écarte du plan formé par la paroi extérieure 102 située au-dessus de la cavité 12 d'une distance transversale E supérieure à 15mm. Si la roue avant est équipée d'un frein à disque D nécessitant, du côté du disque, un bras de fourche plus fin, le batteur unique est alors monté sur le bras de la fourche situé du côté opposé au disque.

Par ailleurs, l'élément de structure considéré peut être une fourche où chacun des deux bras peut être réalisé de façon à comporter une cavité interne dans laquelle il sera possible de loger un batteur dynamique. Ce cas se présente, notamment, si la roue est équipée d'un frein à patins autorisant le montage d'un batteur dans chaque bras. Dans ce cas, la masse de chacun des batteurs sera plus faible que dans la version avec un seul batteur et sera inférieure à 100g, par exemple comprise entre 60g et 100g et, de préférence, entre 70 et 80g.

En conséquence, la masselotte 22 aura une largeur comprise entre 5 et 15 mm, la paroi extérieure 102 du fourreau présentant une excroissance 102a dont les dimensions transversales sont moindres sur toute la longueur de la cavité 12 recevant le batteur. Cette excroissance forme toujours un bossage qui s'écarte du plan formé par la paroi extérieure 102 située au-dessus de la cavité, d'une distance transversale E comprise entre 5 et 15mm.

Dans la position de la figure 4A, la masselotte 22 vient en butée contre la cloison interne 100. Le choc de la masselotte contre la cloison 100 est amorti par la coiffe élastomère 22a qui atténue aussi le bruit de l'impact.

Dans la position de la figure 4C, la masselotte 22 vient cette fois en butée contre la paroi extérieure 102. Le choc de la masselotte contre la portion en saillie 102a de la paroi 102 est ici aussi amorti par la coiffe élastomère 22a.

Sur la figure 4B, le batteur 2 est dans une position intermédiaire centrée entre les positions extrêmes des figures 4A et 4C. Cette position correspond aussi à sa position de repos en l'absence de vibration. Dans cette position, le batteur 2 s'étend, à l'intérieur de la cavité 12, de façon sensiblement parallèle à la fois à l'axe du fourreau 10 et à sa paroi extérieure avant 101.

Pour permettre le bon fonctionnement du batteur, la cavité 12 présente donc une largeur supérieure de 1,5 à 2 fois la largeur du batteur 2 et la cavité 12 présente une largeur supérieure d'au moins 2 fois la largeur de la cavité 11 au niveau de la ligne d'inflexion du rétreint coudé 100b de la paroi interne 100.

Selon l'invention, différents procédés de fabrication de fourches en matériau composite peuvent être mis en oeuvre. Le procédé de réalisation de l'élément de structure de bicyclette décrit ci-dessous est un mode préférentiel de l'invention qui est effectué de la manière suivante.

On prépare d'abord une préforme de première cavité en cire fusible et une préforme de seconde cavité également en cire fusible. La préforme de première cavité est allongée en forme de fourreau et débouche à l'extérieur à ses deux extrémités tandis que la seconde cavité est plus courte, en forme de boîtier fermé.

On recouvre chacune de ces préformes avec un habillage en fibres de carbone. On juxtapose ensuite les deux préformes et on les enveloppe avec un habillage commun de fibres de carbone pour former un ensemble solidaire. Cet habillage commun présente l'avantage de donner ultérieurement des propriétés de bonne résistance mécanique à la fourche et de la revêtir du haut en bas d'une nappe continue de fibres.

On dispose ensuite l'ensemble dans un moule chauffé où est injectée de la résine sous pression qui imprègne les fibres de carbone. Après fusion et évacuation de la cire fondue, on extrait l'élément de structure creux du moule portant latéralement une cavité fermée que l'on par découpe de sa paroi extérieure 102.

L'ouverture ainsi réalisée dans la paroi extérieure 102 doit être suffisante pour permettre l'introduction et le passage du batteur 2, sa mise en place dans la cavité 2 ainsi que sa fixation sur le fourreau 10.

L'étape suivante consiste à obturer l'extrémité basse du fourreau 10 ainsi obtenu par introduction et collage d'un insert 3, de préférence métallique.

Après fixation du batteur dynamique à l'intérieur de la cavité 12 sur l'insert 3 au moyen des vis 4 ou par tout autre moyen de fixation, l'opération finale consiste à monter le capot rapporté 103 (mobile ou amovible) pour fermer la cavité 12, et le solidariser au bras de la fourche.-Si le remplacement du batteur s'avérait nécessaire par la suite, il conviendrait d'enlever le capot 103 pour accéder à la cavité 12 et démonter le batteur 2.

Par ailleurs, la cavité 12 étant accessible de l'extérieur du fait de la fermeture par un capot amovible 103, il serait également possible de disposer et/ou de fixer dans cette cavité formant boîtier (en association éventuelle avec un système d'amortissement), d'autres systèmes, tels que des capteurs, des dispositifs antivol, ou tous types d'accessoires utiles dans le cadre de l'utilisation du cycle (moyens de maintenance,...) ou appartenant personnellement au cycliste (téléphone mobile, clés, ...).
On ne sortira pas du cadre de l'invention si des systèmes d'amortissement autres que des batteurs dynamiques, sont positionnés à l'intérieur de la cavité 12, en particulier des systèmes d'amortissement dissipant de l'énergie par cisaillement qui impliquent l'utilisation d'élastomères. En conclusion, il ressort de l'invention les avantages principaux suivant :

L'élément de structure de cycle ou vélo, tel qu'un élément de cadre ou une fourche, est mécaniquement résistant et comporte deux cavités dont l'une permet le montage, éventuellement amovible, d'un élément fonctionnel et, en particulier, d'un système d'amortissement des vibrations, comme par exemple un batteur dynamique. Ce système d'amortissement, et en particulier le batteur dynamique, est accessible par l'extérieur après démontage d'un capot amovible. Cette disposition permet à l'utilisateur de choisir le mode d'amortissement du cycle en fonction de ses conditions d'utilisation (en plaine ou en montagne par exemple), de ses conditions de route (lisse, rugueuse, pavés, ...) et de la typologie du cycliste lui-même, en particulier de son poids et/ou de sa corpulence. Cette disposition permet également à l'utilisateur de changer le batteur en cas de défaillance ou d'usure.

## Revendications

1. Élément de structure d'un cycle comprenant au moins un fourreau tubulaire (10) pourvu d'une paroi extérieure (101, 102) délimitant, avec une cloison intérieure (100), au moins deux cavités internes (11, 12) délimitées chacune entre ladite cloison intérieure (100) et la paroi extérieure (101,102), l'une desdites cavités internes (12) formant un boîtier dans lequel est logé et fixé un système d'amortissement des vibrations (2), ladite cloison intérieure (100) s'étendant sensiblement dans le sens longitudinal du fourreau (10) pour former un prolongement intérieur de la paroi extérieure (102) qui délimite la cavité interne (12) formant boîtier, **caractérisé en ce que** ladite paroi extérieure (102) comporte, d'une part, une ouverture communiquant avec ladite cavité interne (12) formant boîtier susceptible d'être fermée par un capot amovible (103) et permettant l'accès à ladite cavité interne (12) formant boîtier depuis l'extérieur et, d'autre part, une excroissance (102a) formant un bossage qui s'étend sur toute la longueur de ladite cavité interne (12) formant boîtier.

2. Élément de structure selon la revendication 1, **caractérisé en ce que** la cloison intérieure (100) présente, en dessous de sa jonction avec la paroi extérieure (102), une portion inclinée (100a) vers le bas en direction de la paroi extérieure.

3. Élément de structure selon l'une des revendications précédentes, **caractérisé en ce que** lesdites cavités internes (11, 12) sont délimitées chacune entre ladite cloison intérieure (100) et, respectivement, une paroi extérieure avant (101) et une paroi extérieure arrière (102).

4. Élément de structure d'un cycle selon la revendication précédente, **caractérisé en ce que** la cavité interne (12) formant boîtier est située entre la cloison intérieure (100) et la paroi extérieure arrière (102).

5. Élément de structure selon l'une des revendications 1 ou 2, **caractérisé en ce que** lesdites cavités internes (11, 12) sont délimitées chacune entre ladite cloison intérieure (100) et, respectivement, une paroi extérieure droite et une paroi extérieure gauche.

6. Élément de structure selon l'une des revendications précédentes, **caractérisé en ce que** ladite cloison intérieure (100) participe à la résistance mécanique du fourreau (10) en coopération avec la paroi extérieure (101) située du côté opposé à ladite cavité interne (12) formant boîtier.

7. Élément de structure selon l'une des revendications précédentes, **caractérisé en ce que** ledit système d'amortissement (2) est un batteur dynamique fixé de manière amovible dans la cavité interne (12) formant boîtier.

8. Élément de structure selon la revendication précédente, **caractérisé en ce que** ledit batteur (2) comprend une lame flexible (21) dont une extrémité est fixe et l'autre extrémité est libre et porte une masselotte (22).

9. Élément de structure selon la revendication précédente, **caractérisé en ce que** ladite masselotte (22) est pourvue d'un garnissage élastomère (22a).

10. Élément de structure selon l'une des revendications précédentes, **caractérisé en ce que** le fourreau tubulaire (10) est obturé par un insert (3) sur lequel est fixé ledit système d'amortissement (2).

11. Fourche (1) de cycle comprenant deux fourreaux (10) formant bras dont l'un au moins est constitué d'un élément de structure selon l'une des revendications précédentes.

12. Fourche (1) de cycle selon la revendication précédente, **caractérisée en ce qu'**un seul bras de la fourche reçoit ledit système d'amortissement (2) dans la cavité interne (12) formant boîtier associée et **en ce que** ce système d'amortissement comporte une masse supérieure à 100g.

13. Fourche (1) de cycle selon la revendication 11, **caractérisée en ce que** les deux bras de la fourche reçoivent chacun ledit système d'amortissement (2) dans la cavité interne (12) formant boîtier associée et **en ce que** chaque système d'amortissement (2) comporte une masse inférieure à 100g.

14. Bicyclette comprenant au moins un élément de structure selon l'une des revendications 1 à 10.

15. Bicyclette comprenant une fourche (1) selon l'une des revendications 11 à 13 et un système de freinage sur la roue avant de la bicyclette.

16. Bicyclette selon la revendication précédente, **caractérisée en ce que** ledit système de freinage est un frein à disque.

17. Procédé de réalisation d'un élément de structure selon l'une des revendications 1 à 10 pour un cycle en matériau composite, où on réalise des préformes d'au moins deux cavités en cire fusible, on recouvre chacune des préformes avec un habillage en fibres de carbone puis on juxtapose lesdites préformes et on les enveloppe avec un habillage commun de fibres de carbone pour former un ensemble solidaire, on dispose l'ensemble dans un moule où on injecte de la résine sous pression avec chauffage puis, après fusion et évacuation de la cire fondue, on extrait du moule le fourreau creux ainsi obtenu, ledit fourreau creux constituant ledit au moins un fourreau tubulaire (10) de l'élément de structure, on ouvre l'une desdites au moins deux cavités (12) par découpe de sa paroi extérieure (102), ladite cavité ouverte constituant la cavité interne (12) formant boîtier de l'élément de structure et on obture l'extrémité du fourreau par collage d'un insert (3).

18. Procédé selon la revendication précédente, où on place le système d'amortissement (2) dans ladite cavité interne ouverte (12) formant boîtier, on fixe ledit système d'amortissement par vissage sur l'insert (3) puis on assemble de manière amovible le capot (103) rapporté pour fermer ladite cavité interne (12) formant boîtier.

## Patentansprüche

1. Strukturelement eines Fahrrads, umfassend mindestens ein rohrförmiges Gabelbein (10), das mit einer Außenwand (101, 102) versehen ist, die mit einer inneren Trennwand (100) mindestens zwei Innenhohlräume (11, 12) begrenzt, die jeweils zwischen der inneren Trennwand (100) und der Außenwand (101, 102) begrenzt sind, wobei einer der Innenhohlräume (12) ein Gehäuse bildet, in dem ein Schwingungsdämpfungssystem (2) untergebracht und befestigt ist, wobei sich die innere Trennwand (100) im Wesentlichen in der Längsrichtung des Gabelbeins (10) erstreckt, um eine innere Verlängerung der Außenwand (102) zu bilden, die den gehäusebildenden Innenhohlraum (12) begrenzt,
**dadurch gekennzeichnet, dass** die Außenwand (102) einerseits eine Öffnung, die mit dem gehäusebildenden Innenhohlraum (12) in Verbindung steht, die geeignet ist, durch eine lösbare Abdeckung (103) geschlossen zu werden, und den Zugang zu dem gehäusebildenden Innenhohlraum (12) von außen ermöglicht, und andererseits eine Ausstülpung (102a) aufweist, die einen Vorsprung bildet, der sich über die gesamte Länge des gehäusebildenden Innenhohlraums (12) erstreckt.

2. Strukturelement nach Anspruch 1, **dadurch gekennzeichnet, dass** die innere Trennwand (100) unterhalb ihrer Verbindung mit der Außenwand (102) einen nach unten in Richtung der Außenwand geneigten Abschnitt (100a) vorweist.

3. Strukturelement nach einem der vorstehenden Ansprüche,
**dadurch gekennzeichnet, dass** die Innenhohlräume (11, 12) jeweils zwischen der inneren Trennwand (100) und einer vorderen Außenwand (101) beziehungsweise einer hinteren Außenwand (102) begrenzt sind.

4. Strukturelement eines Fahrrads nach dem vorstehenden Anspruch, **dadurch gekennzeichnet, dass** der gehäusebildende Innenhohlraum (12) zwischen der inneren Trennwand (100) und der hinteren Außenwand (102) angeordnet ist.

5. Strukturelement nach einem der Ansprüche 1 oder 2,
**dadurch gekennzeichnet, dass** die Innenhohlräume (11, 12) jeweils zwischen der inneren Trennwand (100) und einer rechten Außenwand beziehungsweise einer linken Außenwand begrenzt sind.

6. Strukturelement nach einem der vorstehenden Ansprüche,
**dadurch gekennzeichnet, dass** die innere Trennwand (100) im Zusammenwirken mit der Außenwand (101), die auf der dem gehäusebildenden Innenhohlraum (12) gegenüberliegenden Seite angeordnet ist, zu der mechanischen Festigkeit des Gabelbeins (10) beiträgt.

7. Strukturelement nach einem der vorstehenden Ansprüche,
**dadurch gekennzeichnet, dass** das Dämpfungssystem (2) ein dynamischer Klopfer ist, der lösbar in dem gehäusebildenden Innenhohlraum (12) befestigt ist.

8. Strukturelement nach dem vorstehenden Anspruch,
**dadurch gekennzeichnet, dass** der Klopfer (2) ein flexibles Blatt (21) umfasst, deren eines Ende befestigt ist und deren anderes Ende frei ist und ein Gewicht (22) trägt.

9. Strukturelement nach dem vorstehenden Anspruch,
**dadurch gekennzeichnet, dass** das Gewicht (22) mit einer elastomeren Auskleidung (22a) versehen ist.

10. Strukturelement nach einem der vorstehenden Ansprüche,
**dadurch gekennzeichnet, dass** das rohrförmige Gabelbein (10) durch einen Einsatz (3) verschlossen ist, an dem das Dämpfungssystem (2) befestigt ist.

11. Fahrradgabel (1), umfassend zwei armbildende Gabelbeine (10), von denen mindestens eines aus einem Strukturelement nach einem der vorstehenden Ansprüche ausgebildet ist.

12. Fahrradgabel (1) nach dem vorstehenden Anspruch,
**dadurch gekennzeichnet, dass** ein einziger Arm der Gabel das Dämpfungssystem (2) in dem zugehörigen gehäusebildenden Innenhohlraum (12) aufnimmt, und dass dieses Dämpfungssystem eine Masse von mehr als 100 g aufweist.

13. Fahrradgabel (1) nach Anspruch 11, **dadurch gekennzeichnet, dass** die zwei Arme der Gabel jeweils das Dämpfungssystem (2) in dem zugehörigen gehäusebildenden Innenhohlraum (12) aufnehmen, und dass jedes Dämpfungssystem (2) eine Masse von weniger als 100 g aufweist.

14. Zweirad, umfassend mindestens ein Strukturelement nach einem der Ansprüche 1 bis 10.

15. Zweirad, umfassend eine Gabel (1) nach einem der Ansprüche 11 bis 13 und ein Bremssystem an dem Vorderrad des Zweirads.

16. Fahrrad nach dem vorstehenden Anspruch,
**dadurch gekennzeichnet, dass** das Bremssystem eine Scheibenbremse ist.

17. Verfahren zum Herstellen eines Strukturelements nach einem der Ansprüche 1 bis 10 für ein Fahrrad aus Verbundmaterial, wobei man Vorformen von mindestens zwei Hohlräumen aus schmelzbarem Wachs herstellt, jede der Vorformen mit einer Hülle aus Kohlenstofffasern bedeckt, dann die Vorformen nebeneinander legt und sie mit einer gemeinsamen Hülle aus Kohlenstofffasern umwickelt, um eine fest verbundene Einheit zu bilden, die Einheit in einer Form arrangiert, in die man Harz unter Druck mit Erhitzung einspritzt, dann, nach einem Schmelzen und einem Ablassen des schmelzflüssigen Wachses, das auf diese Weise erhaltene hohle Gabelbein aus der Form entnimmt, wobei das hohle Gabelbein das mindestens eine rohrförmige Gabelbein (10) des Strukturelements ausbildet, einen der mindestens zwei Hohlräume (12) durch Zerschneiden seiner Außenwand (102) öffnet, wobei der geöffnete Hohlraum den Innenhohlraum (12) ausbildet, der das Gehäuse des Strukturelements bildet, und das Ende des Gabelbeins durch Einkleben eines Einsatzes (3) verschließt.

18. Verfahren nach dem vorstehenden Anspruch, wobei man das Dämpfungssystem (2) in den offenen gehäusebildenden Innenhohlraum (12) platziert, das Dämpfungssystem durch Verschrauben auf dem Einsatz (3) befestigt, dann die aufgesetzte Abdeckung (103) lösbar zusammenfügt, um den gehäusebildenden Innenhohlraum (12) zu verschließen.

## Claims

1. A structural element of a cycle comprising at least one tubular sleeve (10) provided with an outer wall (101, 102) delimiting, with an inner partition (100), at least two inner cavities (11, 12) each delimited between said inner partition (100) and the outer wall (101, 102), one of said inner cavities (12) forming a housing in which a vibration damping system (2) is housed and secured, said inner partition (100) extending substantially in the longitudinal direction of the sleeve (10) to form an inner extension of the outer wall (102) which delimits the inner cavity (12) forming a housing, **characterized in that** said outer wall (102) comprises, on the one hand, an opening communicating with said inner cavity (12) forming a housing, capable of being closed by a removable cover (103) and allowing access to said inner cavity (12) forming a housing from the exterior, and, on the other hand, a protuberance (102a) forming a bump which extends over the entire length of said inner cavity (12) forming a housing.

2. The structural element according to claim 1, **characterized in that** the inner partition (100) has, below its junction with the outer wall (102), a portion (100a) inclined downward toward the outer wall.

3. The structural element according to one of the preceding claims,
**characterized in that** said inner cavities (11, 12) are each delimited between said inner partition (100) and, respectively, a front outer wall (101) and a rear outer wall (102).

4. The structural element of a cycle according to the preceding claim,
**characterized in that** the inner cavity (12) forming a housing is located between the inner partition (100) and the rear outer wall (102).

5. The structural element according to one of claims 1 or 2,
**characterized in that** said inner cavities (11, 12) are each delimited between said inner partition (100) and, respectively, a right outer wall and a left outer wall.

6. The structural element according to one of the preceding claims,
**characterized in that** said inner partition (100) contributes to the mechanical strength of the sleeve (10) in cooperation with the outer wall (101) located on the side opposite to said inner cavity (12) forming a housing.

7. The structural element according to one of the preceding claims,
**characterized in that** said damping system (2) is a dynamic damper removably attached in the inner cavity (12) forming a housing.

8. The structural element according to the preceding claim,
**characterized in that** said damper (2) comprises a flexible blade (21), one end of which is fixed and the other end is free and carries a flyweight (22).

9. The structural element according to the preceding claim,
**characterized in that** said flyweight (22) is provided with an elastomeric lining (22a).

10. The structural element according to one of the preceding claims,
**characterized in that** the tubular sleeve (10) is closed off by an insert (3) on which said damping system (2) is secured.

11. A cycle fork (1) comprising two sleeves (10) forming arms, at least one of which consists of a structural element according to one of the preceding claims.

12. The cycle fork (1) according to the preceding claim,
**characterized in that** a single arm of the fork receives said damping system (2) in the associated inner cavity (12) forming a housing and **in that** this damping system comprises a mass greater than 100 g.

13. The cycle fork (1) according to claim 11, **characterized in that** both arms of the fork each receive said damping system (2) in the associated inner cavity (12) forming a housing and **in that** this damping system (2) comprises a mass greater than 100g.

14. A bicycle comprising at least one structural element according to one of claims 1 to 10.

15. A bicycle comprising a fork (1) according to one of claims 11 to 13 and a braking system on the front wheel of the bicycle.

16. The bicycle according to the preceding claim, **characterized in that** said braking system is a disc brake.

17. A method for producing a structural element according to one of claims 1 to 10 for a cycle from composite material, wherein preforms of at least two cavities are produced from fusible wax, each of the preforms is covered with a covering made of carbon fibers and then said preforms are juxtaposed and wrapped with a common covering of carbon fibers to form an integral assembly, the assembly is placed in a mold in which resin is injected under pressure with heating and then, after melting and discharging the molten wax, the hollow sleeve thus obtained is removed from the mold, said hollow sleeve constituting said at least one tubular sleeve (10) of the structural element, one of said at least two cavities (12) is opened by cutting into its outer wall (102), said open cavity constituting the inner cavity (12) forming a housing of the structural element, and the end of the sleeve is closed off by gluing an insert (3).

18. The method according to the preceding claim, wherein the damping system (2) is placed in said open inner cavity (12) forming a housing, said damping system is secured by screwing on the insert (3) and then the added cover (103) is removably mounted to close said inner cavity (12) forming a housing.
